# EUROPEAN PATENT APPLICATION

(11) **EP 4 516 976 A1**
(43) Date of publication of application: **05.03.2025**
(21) Application number: 23795995.2
(22) Date of filing: 29.03.2023
(51) Int. Cl.: D02G 3/26, C01B 32/168, D01F 9/127, D02G 3/16

(54) **METHOD FOR MANUFACTURING CARBON NANOTUBE TWISTED YARN**

(30) Priority: 26.04.2022 JP 2022072377
(71) Applicant: LINTEC CORPORATION, Itabashi-ku Tokyo 173-0001 (JP)
(72) Inventor: HAGIHARA Yoshiaki, Tokyo 173-0001 (JP)
(74) Representative: Gille Hrabal Partnerschaftsgesellschaft mbB Patentanwälte
(86) International application number: PCT/JP2023/012782
(87) International publication number: WO 2023/210248

(57) **Abstract**

A method for manufacturing a twisted carbon nanotube yarn includes: drawing carbon nanotubes in sheet form from an end portion of a carbon nanotube forest to provide a carbon nanotube sheet; performing false twisting by twisting the carbon nanotube sheet and then performing untwisting to provide a carbon nanotube linear body; and twisting the carbon nanotube linear body to provide a twisted carbon nanotube yarn, in which the number of twists when the carbon nanotube sheet is false-twisted in the false twisting is in a range from 300 T/m to 5,000 T/m, and the number of twists when the carbon nanotube linear body is twisted in the providing of the twisted carbon nanotube yarn is in a range from 900 T/m to 5,000 T/m.

## Description

### TECHNICAL FIELD

The present invention relates to a method for manufacturing a twisted carbon nanotube yarn.

### BACKGROUND ART

Carbon nanotubes have excellent mechanical properties, electrical properties, thermal properties, or the like, and are expected to be used in industries, such as field emission displays or conductive fillers. In particular, a twisted carbon nanotube yarn made by spinning carbon nanotube fibers is expected to be used.

A twisted carbon nanotube yarn is produced by twisting a sheet of carbon nanotubes drawn in yarn form from a carbon nanotube substrate. However, in the case of producing a twisted carbon nanotube yarn, the strength of the carbon nanotube sheet drawn from the carbon nanotube substrate is low. This resulted in a problem that when the carbon nanotubes drawn from the substrate were strongly twisted, the fibers broke. In addition, the twisted carbon nanotube yarn produced as described above was very thin. This resulted in a problem that the yarn had insufficient tensile strength and electrical conductivity. To solve such problems, for example, Patent Literature 1 describes a method for manufacturing a twisted carbon nanotube yarn, in which a twisted yarn containing carbon nanotubes is irradiated with an electron beam.

### CITATION LIST

### PATENT LITERATURE

Patent Literature 1: Japanese Unexamined Patent Application Publication No. 2011-153392

### SUMMARY OF THE INVENTION

### PROBLEMS TO BE SOLVED BY THE INVENTION

However, in the method described in Patent Literature 1, the strength of the carbon nanotube sheet drawn from the substrate remains weak. Thus, it is not possible to strongly twist the carbon nanotube sheet drawn from the substrate. Further, insufficient twisting fails to improve the density of the twisted carbon nanotube yarn, resulting in a decrease in electrical conductive properties.

It is an object of the invention to provide a method for manufacturing a twisted carbon nanotube yarn having excellent strength and electrical conductive properties.

### MEANS FOR SOLVING THE PROBLEMS

[1] A method for manufacturing a twisted carbon nanotube yarn, including: drawing carbon nanotubes in sheet form from an end portion of a carbon nanotube forest to provide a carbon nanotube sheet; performing false twisting by twisting the carbon nanotube sheet and then performing untwisting to provide a carbon nanotube linear body; and twisting the carbon nanotube linear body to provide a twisted carbon nanotube yarn, in which the number of twists when the carbon nanotube sheet is false-twisted in the false twisting is in a range from 300 T/m to 5,000 T/m, and the number of twists when the carbon nanotube linear body is twisted in the providing of the twisted carbon nanotube yarn is in a range from 900 T/m to 5,000 T/m.
[2] In the method for manufacturing a twisted carbon nanotube yarn according to [1], a void fraction of the twisted carbon nanotube yarn is in a range from 0% to 1%.
[3] In the method for manufacturing a twisted carbon nanotube yarn according to [1] or [2], electrical conductivity of the twisted carbon nanotube yarn is in a range from 6.0 × 10² S/cm to 6.3 × 10⁵ S/cm.
[4] In the method for manufacturing a twisted carbon nanotube yarn according to any of [1] to [3], a tensile strength of the twisted carbon nanotube yarn is in a range from 750 MPa to 5,000 MPa.

According to the aspect of the invention, it is possible to provide a method for manufacturing a twisted carbon nanotube yarn having excellent strength and electrical conductive properties.

### BRIEF DESCRIPTION OF DRAWINGS

Fig. 1 is a SEM photograph of a cross section of a twisted carbon nanotube yarn obtained in Example 1.
Fig. 2 is a SEM photograph of a cross section of a twisted carbon nanotube yarn obtained in Comparative Example 1.
Fig. 3 is a SEM photograph of a cross section of a twisted carbon nanotube yarn obtained in Comparative Example 4.

### DESCRIPTION OF EMBODIMENT(S)

Hereinafter, an exemplary embodiment of the invention will be described.

A method for manufacturing a twisted carbon nanotube yarn according to the exemplary embodiment includes a step of drawing carbon nanotubes in sheet form from an end portion of a carbon nanotube forest to provide a carbon nanotube sheet (drawing step), a step of performing a false twisting step of twisting the carbon nanotube sheet and then performing untwisting to provide a carbon nanotube linear body (false twisting step), and a step of twisting the carbon nanotube linear body to provide a twisted carbon nanotube yarn (main twisting step).

In the exemplary embodiment, the false twisting step of twisting the carbon nanotube sheet and then performing untwisting is performed. This can increase the strength of the carbon nanotube linear body before the main twisting step. Thus, even if the carbon nanotube linear body is strongly twisted in the main twisting step, the fibers can be prevented from breaking. According to the exemplary embodiment, a twisted carbon nanotube yarn sufficiently twisted can be produced, and a twisted carbon nanotube yarn having excellent strength and electrical conductive properties can be manufactured.

### Drawing Step

In the drawing step, a carbon nanotube forest is prepared.

The carbon nanotube forest can be produced, for example, by a chemical vapor deposition method or by a method in which carbon nanotubes grow in a cotton-like form in air. Among these, from the viewpoint of the quality of the resulting carbon nanotubes, carbon nanotubes are preferably manufactured by the chemical vapor deposition method. The carbon nanotube forest is exemplified by a carbon nanotube assembly grown by chemical vapor deposition on a substrate.

As the substrate, any known substrate can be used as appropriate. For example, a plastic substrate, a glass substrate, a silicon substrate, or a metal substrate containing a metal such as iron or copper or an alloy thereof can be used. A silicon dioxide film may be stacked on a surface of any of these substrates.

The carbon nanotubes grown by chemical vapor deposition on the substrate may be single-walled carbon nanotubes, double-walled carbon nanotubes, multi-walled carbon nanotubes, or a mixture thereof.

The form of the carbon nanotube assembly is not particularly limited. From the viewpoint of facilitating the formation of twisted carbon nanotube yarn, a high-density, highly oriented assembly formed on a substrate is preferred. The carbon nanotubes on the substrate preferably have a bulk density of 20 mg/cm³ or more. When the bulk density is 20 mg/cm³ or more, the drawability can be improved. The term "highly oriented" indicates that the carbon nanotubes are adjacent to each other and oriented perpendicular to a planar surface of the substrate.

The height (length) of the carbon nanotubes in the carbon nanotube assembly is preferably, on average, 100 µm or more, and more preferably 150 µm or more. The number of layers of the carbon nanotubes in the carbon nanotube assembly may be one or more, and is preferably in a range from 1 to 40.

In the drawing step, carbon nanotubes are drawn in sheet form from an end portion of the carbon nanotube forest to provide a carbon nanotube sheet.

The carbon nanotube sheet can be drawn with a known drawing tool.

The width of the carbon nanotube sheet is preferably in a range from 20 mm to 200 mm, more preferably in a range from 25 mm to 100 mm.

### False Twisting Step

In the false twisting step, the false twisting step of twisting the carbon nanotube sheet obtained in the drawing step and then performing untwisting is performed, thereby providing a carbon nanotube linear body.

As a method for twisting the carbon nanotube sheet, a known method can be employed. For example, the carbon nanotube sheet can be twisted by rotating a roller or the like holding the carbon nanotube sheet. The carbon nanotube sheet may be twisted by winding it on a roller or the like.

As a method for untwisting the twisted carbon nanotube sheet, a known method can be employed. For example, a roller or the like holding the twisted carbon nanotube sheet can be rotated in the opposite direction to that in which the twisting was performed, thereby untwisting the carbon nanotube sheet. The twisted carbon nanotube sheet may be untwisted by pulling the sheet back from the roller or the like on which the sheet is wound. That is, in the case of performing twisting with a roller or the like, when the roller twists the sheet clockwise, the sheet on the outlet side naturally has a counterclockwise twist and returns to zero twist (no twist). It is preferable to ensure a path line long enough to allow the twist to return naturally.

The number of twists when the carbon nanotube sheet is false-twisted in the false twisting step needs to be in a range from 300 T/m to 5,000 T/m, preferably in a range from 500 T/m to 5,000 T/m, and more preferably in a range from 700 T/m to 5,000 T/m.

The number of twists when the false-twisted carbon nanotube sheet is untwisted is preferably in a range from 300 T/m to 5,000 T/m, more preferably in a range from 500 T/m to 5,000 T/m, and still more preferably in a range from 700 T/m to 5,000 T/m.

When the number of twists is within the above range, the strength of the carbon nanotube linear body can be increased.

### Main Twisting Step

In the main twisting step, the carbon nanotube linear body obtained in the false twisting step is twisted to provide a twisted carbon nanotube yarn.

As a method for twisting the carbon nanotube sheet linear body, a known method can be employed. For example, the carbon nanotube linear body can be twisted by rotating a roller or the like holding the carbon nanotube linear body.

In the main twisting step, the twisted carbon nanotube yarn is wound on a bobbin. At this time, although the twisted carbon nanotube yarn is pulled, the carbon nanotube linear body can be prevented from breaking, this is because the strength of the carbon nanotube linear body has been improved in the false twisting step.

The number of twists when the carbon nanotube linear body is twisted needs to be in a range from 900 T/m to 5,000 T/m, more preferably in a range from 1,000 T/m to 3,000 T/m, and still more preferably 1,000 T/m to 2,000 T/m.

### Twisted Carbon Nanotube Yarn

In this way, the twisted carbon nanotube yarn according to the exemplary embodiment is obtained. The resulting twisted carbon nanotube yarn preferably satisfies the following requirements.

From the viewpoint of strength and handleability of the twisted carbon nanotube yarn, the diameter of the twisted carbon nanotube yarn is preferably in a range from 1 µm to 1,000 µm, more preferably in a range from 15 µm to 100 µm, and still more preferably in a range from 25 µm to 75 µm.

From the viewpoint of strength of the twisted carbon nanotube yarn, the twist angle of the twisted carbon nanotube yarn is preferably in a range from 8 degrees to 50 degrees, more preferably in a range from 10 degrees to 30 degrees. The twist angle can be adjusted by the number of twists when the carbon nanotube linear body is twisted. The twist may be untwisted after the main twisting step so that the twist angle falls within the above range.

The void fraction of the twisted carbon nanotube yarn is preferably in a range from 0% to 1%, more preferably in a range from 0% to 0.5%. When the void fraction is within the above range, the strength and electrical conductive properties of the twisted carbon nanotube yarn can be improved.

The void fraction of the twisted carbon nanotube yarn can be measured by image analysis of a scanning electron microscope (SEM) photograph.

Specifically, the void fraction can be calculated by observing a cross section of the twisted carbon nanotube yarn with a SEM and binarizing a carbon nanotube portion and a void portion. Void fraction [%] = (area of void portion/cross-sectional area of twisted carbon nanotube yarn) × 100

From the viewpoint of the electrical conductive properties of the twisted carbon nanotube yarn, the electrical conductivity of the twisted carbon nanotube yarn is preferably in a range from 6.0 × 10² S/cm to 6.3 × 10⁵ S/cm.

The electrical conductivity of the twisted carbon nanotube yarn can be calculated by measuring the diameter (µm) and line resistance (Ω/cm) of the twisted carbon nanotube yarn and converting them into electrical conductivity per cross-sectional area.

From the viewpoint of the strength of the twisted carbon nanotube yarn, the tensile strength of the twisted carbon nanotube yarn is preferably in a range from 750 MPa to 5,000 MPa, more preferably in a range from 1,000 MPa to 5,000 MPa.

The tensile strength of the twisted carbon nanotube yarn can be measured by a method described in JIS L1095.

### Modifications of Exemplary Embodiment

The scope of the invention is not limited to the above exemplary embodiment, and modifications, improvements, etc. are included within the scope of the invention as long as they are compatible with an object of the invention.

### Example(s)

While the invention will be described in more detail below with reference to examples, the invention is not limited to these examples.

### Example 1

A carbon nanotube forest was cut so as to have a width of 33 mm. From an end portion thereof, the carbon nanotubes were drawn in sheet form (width: 33 mm) in a direction in which the deviation from the parallel direction of the carbon nanotube forest was within 10 degrees, thereby providing a carbon nanotube sheet. The resulting carbon nanotube sheet was bundled in yarn form using a guide, and a false twisting step was performed by twisting the yarn-like carbon nanotube (the number of twists: 1,000 T/m) and untwisting it (allowing it to return naturally), thereby providing a carbon nanotube linear body. The resulting carbon nanotube linear body was twisted (the number of twists: 1,200 T/m) and wound on a bobbin to provide a twisted carbon nanotube yarn.

### Comparative Example 1

A carbon nanotube forest was cut so as to have a width of 33 mm. From an end portion thereof, the carbon nanotubes were drawn in sheet form (width: 33 mm) in a direction in which the deviation from the parallel direction of the carbon nanotube forest was within 10 degrees, thereby providing a carbon nanotube sheet. The resulting carbon nanotube sheet was bundled in yarn form using a guide. The yarn-like carbon nanotube was twisted (the number of twists: 1,000 T/m) and then untwisted (naturally returned), thereby providing a carbon nanotube yarn.

### Comparative Example 2

A carbon nanotube forest was cut so as to have a width of 33 mm. From an end portion thereof, the carbon nanotubes were drawn in sheet form (width: 33 mm) in a direction in which the deviation from the parallel direction of the carbon nanotube forest was within 10 degrees, thereby providing a carbon nanotube sheet. The resulting carbon nanotube sheet was bundled in yarn form using a guide. The yarn-like carbon nanotube was twisted (the number of twists: 1,200 T/m) and wound on a bobbin. At this time, the twisted carbon nanotube yarn was broken, thus failing to produce the twisted carbon nanotube yarn.

### Comparative Example 3

A carbon nanotube forest was cut so as to have a width of 33 mm. From an end portion thereof, the carbon nanotubes were drawn in sheet form (width: 33 mm) in a direction in which the deviation from the parallel direction of the carbon nanotube forest was within 10 degrees, thereby providing a carbon nanotube sheet. The resulting carbon nanotube sheet was bundled in yarn form using a guide, thereby providing a yarn-like carbon nanotube.

### Comparative Example 4

A carbon nanotube forest was cut so as to have a width of 33 mm. From an end portion thereof, the carbon nanotubes were drawn in sheet form (width: 33 mm) in a direction in which the deviation from the parallel direction of the carbon nanotube forest was within 10 degrees, thereby providing a carbon nanotube sheet. The resulting carbon nanotube sheet was bundled in yarn form using a guide, and a false twisting step was performed by twisting the yarn-like carbon nanotube (the number of twists: 1,000 T/m) and untwisting it (allowing it to return naturally), thereby providing a carbon nanotube linear body. The resulting carbon nanotube linear body was twisted (the number of twists: 800 T/m) and wound on a bobbin to provide a twisted carbon nanotube yarn.

### Comparative Example 5

A carbon nanotube forest was cut so as to have a width of 33 mm. From an end portion thereof, the carbon nanotubes were drawn in sheet form (width: 33 mm) in a direction in which the deviation from the parallel direction of the carbon nanotube forest was within 10 degrees, thereby providing a carbon nanotube sheet. The resulting carbon nanotube sheet was bundled in yarn form using a guide, and a false twisting step was performed by twisting the yarn-like carbon nanotube (the number of twists: 250 T/m) and untwisting it (allowing it to return naturally), thereby providing a carbon nanotube linear body. The resulting carbon nanotube linear body was twisted (the number of twists: 1,200 T/m) and wound on a bobbin. At this time, the twisted carbon nanotube yarn was broken, thus failing to produce the twisted carbon nanotube yarn.

### Evaluation of Carbon Nanotube Yarn

The carbon nanotube yarns obtained in Example 1 and Comparative Examples 1 to 5 were evaluated in terms of the void fraction, electrical conductivity, and tensile strength. Table 1 presents the obtained results. In Comparative Examples 2 and 5, no evaluation was performed because the twisted carbon nanotube yarn was not produced. In Comparative Example 3, the void fraction was not evaluated.

### (1) Void Fraction

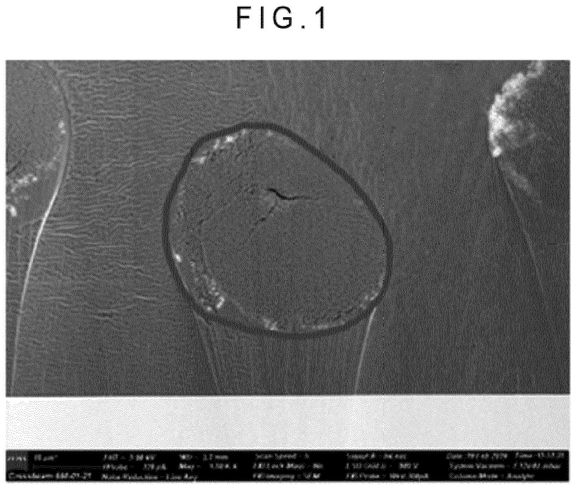

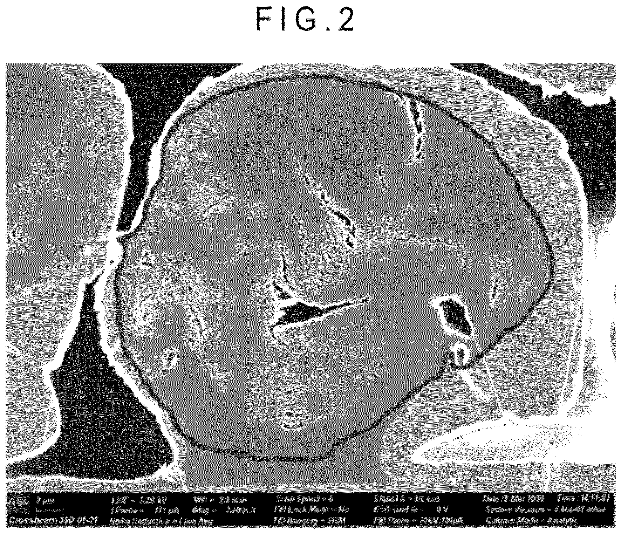

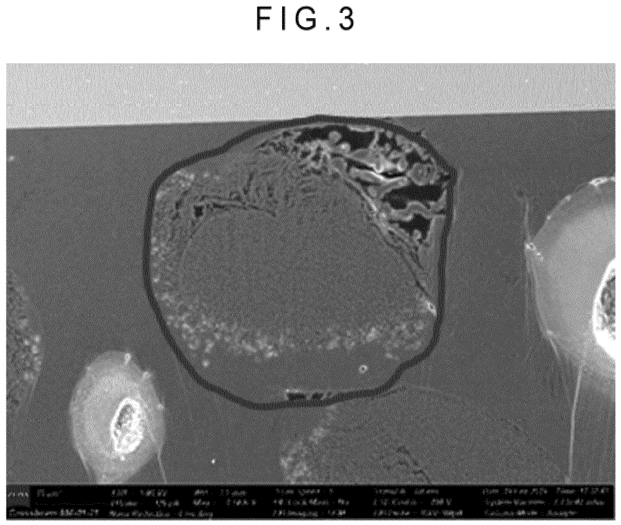

The void fraction of the twisted carbon nanotube yarn was measured by image analysis of a SEM photograph. Specifically, the void fraction was calculated by observing a cross section of the twisted carbon nanotube yarn with a SEM and binarizing a carbon nanotube portion and a void portion. Figs. 1, 2, and 3 are SEM photographs of the cross sections of the twisted carbon nanotube yarns obtained in Example 1 and Comparative Examples 1 and 4, respectively. Void fraction [%] = (area of void portion/cross-sectional area of twisted carbon nanotube yarn) × 100

Specifically, the binarization was performed in the following manner. That is, the SEM photograph image was cropped to leave the cross-sectional area portion of the yarn. The cross-sectional area portion and the hole area portion were separated by adjusting brightness, contrast, and mid-tones. The number of pixels was counted using binarization software on the cross-sectional area portion and the hole area portion, respectively to calculate the cross-sectional area and the void portion area of the twisted carbon nanotube yarn.

### (2) Electrical Conductivity

The electrical conductivity of the twisted carbon nanotube yarn was calculated by measuring the diameter (µm) and line resistance (Ω/cm) of the twisted carbon nanotube yarn and converting them into electrical conductivity per cross-sectional area.

### (3) Tensile Strength

The tensile strength was measured according to a method described in JIS L1095.

**Table 1**

| | Void fraction (%) | Electrical conductivity (S/cm) | Tensile strength (MPa) |
|---|---|---|---|
| Example 1 | 0.11 | 957 | 1348 |
| Comparative Example 1 | 3.14 | 564 | 949 |
| Comparative Example 2 | - | - | - |
| Comparative Example 3 | - | 76 | 80 |
| Comparative Example 4 | 1.87 | 372 | 623 |
| Comparative Example 5 | - | - | - |

As described above, it was found that the twisted carbon nanotube yarn obtained in Example 1 had a lower void fraction, higher electrical conductivity, and higher tensile strength than those of the carbon nanotube yarn obtained in Comparative Example 1. This indicated that the invention provided the twisted carbon nanotube yarn having excellent strength and electrical conductive properties.

## Claims

1. A method for manufacturing a twisted carbon nanotube yarn, comprising:
drawing carbon nanotubes in sheet form from an end portion of a carbon nanotube forest to provide a carbon nanotube sheet;
performing false twisting by twisting the carbon nanotube sheet and then performing untwisting to provide a carbon nanotube linear body; and
twisting the carbon nanotube linear body to provide a twisted carbon nanotube yarn,
wherein the number of twists when the carbon nanotube sheet is false-twisted in the false twisting is in a range from 300 T/m to 5,000 T/m, and
the number of twists when the carbon nanotube linear body is twisted in the providing of the twisted carbon nanotube yarn is in a range from 900 T/m to 5,000 T/m.

2. The method for manufacturing a twisted carbon nanotube yarn according to claim 1,
wherein a void fraction of the twisted carbon nanotube yarn is in a range from 0% to 1%.

3. The method for manufacturing a twisted carbon nanotube yarn according to claim 1 or 2,
wherein electrical conductivity of the twisted carbon nanotube yarn is in a range from 6.0 × 10² S/cm to 6.3 × 10⁵ S/cm.

4. The method for manufacturing a twisted carbon nanotube yarn according to claim 1 or 2,
wherein a tensile strength of the twisted carbon nanotube yarn is in a range from 750 MPa to 5,000 MPa.
